# EUROPÄISCHE PATENTSCHRIFT

(11) **EP 3 446 393 B1**
(45) Veröffentlichungstag und Bekanntmachung des Hinweises auf die Patenterteilung: **03.08.2022**
(21) Anmeldenummer: 17727165.7
(22) Anmeldetag: 24.05.2017
(51) Int. Cl.: H02J 3/38, H02J 3/14, H02J 13/00

(54) **VERFAHREN ZUR STEUERUNG EINES ENERGIEFLUSSES IN EINEM MEHRERE TEILNEHMER AUFWEISENDEN ENERGIENETZWERK**
METHOD FOR CONTROLLING AN ENERGY FLOW IN AN ENERGY NETWORK HAVING A PLURALITY OF USERS
PROCÉDÉ DE COMMANDE D'UN FLUX D'ÉNERGIE DANS UN RÉSEAU D'ÉNERGIE COMPORTANT PLUSIEURS UTILISATEURS

(30) Priorität: 17.06.2016 DE 102016210885
(43) Veröffentlichungstag der Anmeldung: 27.02.2019
(73) Patentinhaber: Siemens Mobility GmbH, 81739 München (DE)
(72) Erfinder: BIANCHI, Roberto, 91056 Erlangen (DE); SCHMID, Otto, 91341 Röttenbach (DE)
(86) Internationale Anmeldenummer: PCT/EP2017/062494
(87) Internationale Veröffentlichungsnummer: WO 2017/215892

(56) Entgegenhaltungen:
- EP-A2- 2 506 382
- WO-A2-2012/084196
- DE-A1-102008 040 272

## Beschreibung

Die Erfindung betrifft ein Verfahren zur Steuerung des Energieflusses in einem mehrere Teilnehmer aufweisenden Energienetzwerk, insbesondere einem Energienetzwerk einer verkehrstechnischen Anlage, eine Energiemanagementeinrichtung, einen Teilnehmer zum Einsatz in einem Energienetzwerk und ein Energienetzwerk, insbesondere ein Energienetzwerk einer verkehrstechnischen Anlage.

Verfahren zur Steuerung des Energieflusses und Energiemanagementeinrichtungen werden immer wichtiger für viele Industriebereiche und Anwendungen. Übergeordnetes Ziel dabei ist vorwiegend die Steigerung der Energieeffizienz. Auch staatliche Vorgaben wie beispielsweise das Gesetz für erneuerbare Energien oder Verbände und Normengremien, wie beispielsweise ISO 50001, treiben Entwicklungen in diese Richtung. Die Steigerung der Energieeffizienz kann branchenspezifisch auf verschiedenste Möglichkeiten erzielt werden. Typischerweise jedoch immer nach gleichen Hauptfunktionen, wie beispielsweise Datenerfassung/Datenaustausch, Schaffung von Transparenz und Berichterstattung, Vorhersage, Analyse und Optimierung, Demand-Management, Last-Management bzw. Beeinflussung von Teilnehmern wie Erzeugern und Verbrauchern.

Ein Energienetzwerk kann beispielsweise das einer verkehrstechnischen Anlage, wie einer eisenbahntechnischen Anlage, E-Bus- oder E-Truck-Anlage sein. Selbstverständlich ist die Erfindung auch auf andere Energienetzwerke anwendbar. Teilnehmer des Energienetzwerks sind beispielsweise Erzeuger, Verbraucher oder Speicher von elektrischer Energie und können auch als Subsysteme bezeichnet werden. Die Teilnehmer können eine elektrische Energiemenge speichern oder zur Verfügung stellen. Das Speichermedium selber kann dabei auch eine nicht elektrische Größe sein, wie beispielsweise ein Magnetfeld bei Magnetspeichersystemen, Rotationsenergie bei Schwungmassenspeichern (fly-wheels) oder auch Wärmemengen von Bauteilen oder Gebäuden.

Bekannte Energiemanagementeinrichtungen sind beispielsweise in der WO 2012076039 A1 oder der DE 102005056084 A1 beschrieben.

Darüber hinaus ist aus der DE 10 2008 040272 A1 eine Steuereinrichtung und ein Verfahren zum Steuern eines an eine Energieversorgung angeschlossenen Geräts bekannt, mittels der das angeschlossene Gerät aktiviert oder deaktiviert werden kann, je nachdem, ob genügend Energie bereitgestellt werden kann.

Weiterhin beschreibt die EP 2 506382 A2 ein Verfahren und eine Vorrichtung zur elektrischen Energieversorgung zumindest eines Verbrauchers über ein elektrisches Energieversorgungsnetz, wobei die elektrische Leistungsentnahme des Verbrauchers anhand einer vorgegebenen Leistungsentnahmekennlinie mittels einer Verbraucherreglereinheit geregelt wird.

Bekannte Energiemanagementeinrichtungen erfassen insbesondere die Ist-Werte der Energieverbräuche der einzelnen Teilnehmer in Echtzeit oder als Prognose. Die Ist-Werte können dabei auch gemittelte Ist-Werte, Spitzen- oder Effektivwerte sein. Die so erfassten Energieverbräuche werden von der Energiemanagementeinrichtung für die verschiedenen oben beschriebenen Hauptfunktionen verwendet. Die Energiemanagementeinrichtung kann dabei auch die Funktion umfassen, die aktuelle Situation einer Auslastung der Teilnehmer zu beschreiben. Kennt man eine aktuelle Auslastung und die Grenzen, wie beispielsweise die Betriebsgrenzen, so kann eine Energiemanagementeinrichtung auch die betrieblichen Toleranzbänder der Teilnehmer berechnen und deren Verhalten abbilden. Diese Berechnungen können letztendlich aufzeigen, welche Energiemengen durch den entsprechenden Teilnehmer gestellt, verbraucht oder gespeichert werden können.

Problematisch ist bei den bekannten Einrichtungen und Verfahren, dass bei ungenauer Kenntnis der unterschiedlichsten Teilnehmer die Wirksamkeit der Systeme nachlässt. Ferner sind eine Reihe von komplexen und aufwendigen Berechnungen auf Seiten der Energiemanagementeinrichtung nötig, die die Komplexität und Störungsanfälligkeit der Energiemanagementeinrichtung erhöht.

Es ist daher die Aufgabe der vorliegenden Erfindung, ein verbessertes Verfahren zur Steuerung des Energieflusses in einem Energienetzwerk bereitzustellen, das gegenüber den bekannten Verfahren weniger komplex und störungsanfällig ist.

Diese Aufgabe wird erfindungsgemäß gelöst durch ein Verfahren zur Steuerung des Energieflusses in einem mehrere Teilnehmer aufweisenden Energienetzwerkeiner verkehrstechnischen Anlage nach Anspruch 1, bei dem wenigstens eine für eine Auslastung des Energienetzwerks repräsentative Kenngröße und wenigstens eine Steuerungsinformation ermittelt wird, bei dem die wenigstens eine Kenngröße und die wenigstens eine Steuerungsinformation an zumindest einige der Teilnehmer übermittelt wird und bei dem zumindest von einigen der Teilnehmer in Abhängigkeit von der wenigstens einen Kenngröße und der wenigstens einen Steuerungsinformation ein Energieverbrauch des Teilnehmers selbstständig gesteuert wird.

Die erfindungsgemäße Lösung hat den Vorteil, dass die Teilnehmer ihren Energieverbrauch selbstständig steuern und dadurch eine zentrale Energiemanagementeinrichtung weniger komplex ausgebildet werden muss, da diese weniger Berechnungen und Arbeit durchführen muss. So kann auf einfache Weise eine Steigerung der Energieeffizienz erreicht werden, insbesondere bei Energienetzwerken und Teilnehmern, bei welchen keine ausreichende Kommunikation gegeben ist. Die erfindungsgemäße Idee besteht unter anderem darin, dass eine gesamtenergetische Lage in Form der Kenngröße und/oder der Steuerungsinformation an die Teilnehmer übermittelt wird, die diese dann selbstständig verarbeiten und Maßnahmen daraus ableiten. Es wird also mehr die Intelligenz auf Seiten der Teilnehmer genutzt, wodurch eine zentrale Energiemanagementeinrichtung entlastet wird. Durch die Erfindung wird auf Seiten der Energiemanagementeinrichtung eine bisher nötige aufwendige Datenbeschaffung in der Engineeringphase von Projekten überflüssig und aufwendige Datenschnittstellen sowie Parametrierungsmöglichkeiten werden überflüssig. Energiemanagementeinrichtungen können dadurch weniger komplex und weniger aufwendig ausgestaltet werden.

Unter der Auslastung des Energienetzwerks wird hier die Gesamtsituation und die Systemauslastung des Energienetzwerks bezogen auf eine maximal mögliche Kapazität der Energieversorgung verstanden. Die Kapazität kann dabei auf technischen und/oder wirtschaftlichen Grenzen beruhen und sich zeitlich variabel ändern.

Der Begriff Energienetzwerk ist hier nicht einschränkend in Richtung einer Gesamtheit eines Energienetzwerks gemeint, sondern kann immer auch nur einen Teil eines Gesamtenergienetzwerkes bedeuten.

Erfindungsgemäß wird die wenigstens eine Steuerungsinformation an zumindest einige der Teilnehmer übermittelt. Die Steuerungsinformation kann angeben, in welche Richtung oder auf welche Art die Teilnehmer ihren Energieverbrauch steuern sollen. Solche Steuerungsinformationen können beispielsweise Ausdrücken, dass ein uneingeschränkter Betrieb möglich ist, also kein Bedarf zur Energieverbrauchsreduktion besteht und auch eine Erhöhung des Energieverbrauchs erlaubt ist. Alternative Steuerungsinformationen könnten heißen: Energieverbrauch konstant halten, also kein Bedarf zur Energieverbrauchsreduktion, aber auch keine Erhöhung des Energieverbrauchs erlaubt, oder eine Anweisung zur Reduzierung des Energieverbrauchs, also eines Bedarfs zur Energieverbrauchsreduktion. Zusätzlich kann ein starker Reduzierungsbefehl ausgegeben werden, wenn ein sehr großer Bedarf für eine Energieverbrauchsreduktion besteht und der Gesamtzustand im Energienetzwerk kritisch ist.

Die erfindungsgemäße Lösung kann durch vorteilhafte Ausgestaltungen weiterentwickelt werden, die im Folgenden beschrieben sind.

So kann wenigstens ein Grenzwert für die Auslastung des Energienetzwerks an zumindest einige der Teilnehmer übermittelt werden. Dies hat den Vorteil, dass die Teilnehmer anhand von Kenngröße und Grenzwert den Zustand des Energienetzwerks ermitteln können und der Grenzwert nicht beim Teilnehmer vorhanden sein muss. Ferner kann der Grenzwert so leicht aktualisiert werden.

Um das Verfahren möglichst einfach für eine zentrale Energiemanagementeinrichtung zu gestalten, kann die Steuerungsinformation an alle Teilnehmer übermittelt werden. So muss nicht zwischen verschiedenen Teilnehmer unterschieden werden. Alternativ kann wenigstens eine erste Steuerungsinformation an eine erste Gruppe von Teilnehmern und wenigstens eine zweite Steuerungsinformation an eine zweite Gruppe von Teilnehmern übermittelt werden. So kann ein Prioritätsmechanismus eingeführt werden, der das Verfahren weiter verbessert. Der maximale jeweilige Energiebedarf beziehungsweise die Eingriffsmöglichkeiten der verschiedenen Teilnehmer sind abhängig von der jeweiligen Auslegung und somit bekannt. Diese können zentral beispielsweise in der Energiemanagementeinrichtung hinterlegt werden. Darauf basierend werden die Steuerungsinformationen zur Reduzierung des Energiebedarfs erfindungsgemäß zunächst an die erste Gruppe mit großen Verbrauchern unter den Teilnehmern abgesetzt und erst in einer späteren Iteration an die zweite Gruppe mit kleineren Verbrauchern unter den Teilnehmern. Dabei können die Teilnehmer der ersten Gruppe durchaus auch in der zweiten Gruppe erneut enthalten sein.

Um die zentrale Energiemanagementeinrichtung und das Verfahren besonders einfach auszugestalten, kann die wenigstens eine Kenngröße zentral und ohne Kommunikation mit den Teilnehmern ermittelt werden. Dies hat den Vorteil, dass keine Kommunikation von den Teilnehmern in Richtung der zentralen Energiemanagementeinrichtung nötig ist. Zur Erfassung der Auslastung des Energienetzwerks reicht eine zentrale Sensorik, die üblicherweise vorhanden ist. Teilnehmer müssen somit keine Ist-Werte an die Energiemanagementeinrichtung übermitteln.

In einer weiteren vorteilhaften Ausgestaltung kann die wenigstens eine Kenngröße periodisch ermittelt und übermittelt werden. So werden die Teilnehmer über eine sich verändernde Kenngröße des Energienetzwerks ständig informiert, so dass sie zügig reagieren können. Die Ermittlung und Übermittlung der Kenngröße kann beispielsweise alle fünf Sekunden erfolgen.

Um keinem Teilnehmer unlösbare oder unvorteilhafte Aufgaben zu stellen, kann der Energieverbrauch des Teilnehmers in Abhängigkeit vom jeweiligen Zustand des Teilnehmers gesteuert werden. Wenn beispielsweise ein Teilnehmer gerade eine kritische Operation durchführt, kann er den aktuellen Energieverbrauch beibehalten, um die Operation nicht zu gefährden. Ein anderer Teilnehmer, der sich in einem unkritischen Zustand befindet, kann dagegen eine Energiereduzierung durchführen, ohne Schwierigkeiten. Die Entscheidung wird von jedem Teilnehmer selbstständig getroffen.

In den meisten Fällen wird der Energieverbrauch der Teilnehmer selbstständig reduziert werden. Es kann jedoch auch sein, dass die Teilnehmer bei einer bestimmten Kenngröße und/oder Steuerungsinformation den Energieverbrauch erhöhen, um damit beispielsweise eine Rückspeisung von Energie von einem Eisenbahnnetzwerk in ein übergeordnetes Versorgungsnetz zu verhindern oder Energiespeicher zu füllen.

Die oben genannte Aufgabe wird erfindungsgemäß auch gelöst durch eine Energiemanagementeinrichtung nach Anspruch 8, zur Steuerung des Energieflusses in einem mehrere Teilnehmer aufweisenden Energienetzwerkeiner verkehrstechnischen Anlage, mit wenigstens einer Verarbeitungseinrichtung, die zur Ermittlung wenigstens einer für eine Auslastung des Energienetzwerks repräsentativen Kenngröße und wenigstens einer Steuerungsinformation ausgebildet ist, und mit wenigstens einer Kommunikationseinrichtung, die zur Übermittlung der wenigstens einen Kenngröße und der wenigstens einen Steuerungsinformation an zumindest einige der Teilnehmer ausgebildet ist.

Dies hat den oben bereits genannten Vorteil, dass auf besonders einfache Weise ein Hinweis an die Teilnehmer übermittelt werden kann, wie sie ihren Energieverbrauch steuern sollen.

Die Erfindung betrifft ferner einen Teilnehmer nach Anspruch 9 zum Einsatz in einem Energienetzwerkeiner verkehrstechnischen Anlage, mit einer Steuerungseinrichtung, die zum selbstständigen Steuern eines Energieverbrauchs des Teilnehmers in Abhängigkeit von wenigstens einer für eine Auslastung des Energienetzwerks repräsentativen Kenngröße und wenigstens einer, von einer Energiemanagementeinrichtung nach Anspruch 8 empfangenen, Steuerungsinformation ausgebildet ist.

Schließlich betrifft die Erfindung noch ein Energienetzwerk, einer verkehrstechnischen Anlage, nach Anspruch 10 mit mehreren Teilnehmern gemäß Anspruch 9 und mit wenigstens einer Energiemanagementeinrichtung nach Anspruch 8.

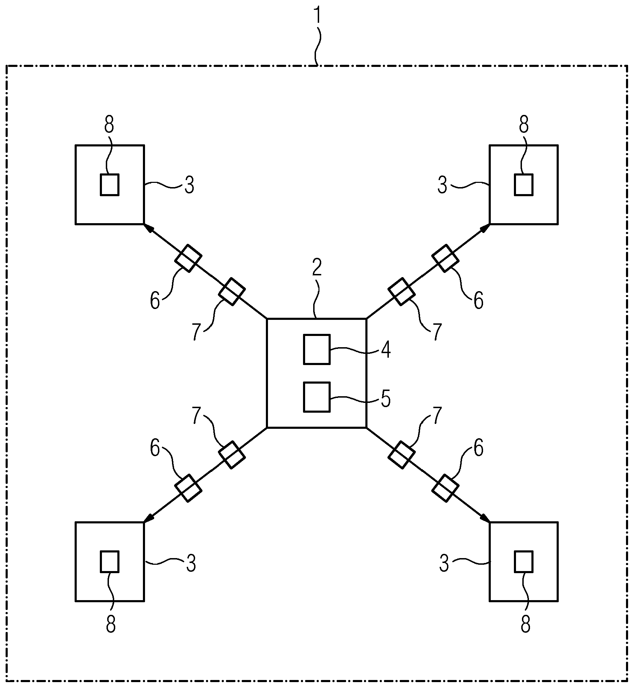

Im Folgenden wird die Erfindung mit Bezug auf die beigefügte Figur erläutert. Die Figur zeigt eine schematische Darstellung einer beispielhaften Ausführungsform eines erfindungsgemäßen Energienetzwerks.

Ein Energienetzwerk 1 in der in der Figur beispielhaft dargestellten Ausführungsform weist eine Energiemanagementeinrichtung 2 und mehrere Teilnehmer 3 auf. Das Energienetzwerk 1 soll hier beispielhaft das Energienetzwerk einer eisenbahntechnischen Anlage sein. Die Teilnehmer 3 sind beispielsweise Züge, die sich entsprechend des Fahrplans in der eisenbahntechnischen Anlage bewegen, Rolltreppen, Gebäude oder andere Verbraucher, die in der eisenbahntechnischen Anlage oder einer zugehörigen, angeschlossenen Infrastruktur vorhanden sind.

Die Energiemanagementeinrichtung 2 weist eine Verarbeitungseinrichtung 4 und eine Kommunikationseinrichtung 5 auf.

Die Verarbeitungseinrichtung 4 ist zur Ermittlung einer für die Auslastung des Energienetzwerks 1 repräsentativen Kenngröße ausgebildet. Die Auslastung des Energienetzwerks 1 bezieht sich auf die Gesamtsituation und die Systemauslastung bezogen auf die maximale Kapazität der Energieversorgung oder eines Teilsystems davon, beispielsweise eines Teilabschnitts eines E-Netzes. Dazu nutzt die Verarbeitungseinrichtung 4 eine nicht dargestellte zentrale Sensorik, durch die die Auslastung des Energienetzwerks 1 bestimmt werden kann. Die Sensorik kann auch dezentral platziert sein und eine lokale Datenverarbeitung oder Vorverarbeitung aufweisen. In diesem Fall ist allerdings sie Datenauswertung zur Ermittlung der Kenngröße vorzugsweise zentral ausgebildet. Ferner ermittelt die Verarbeitungseinrichtung 4 eine Steuerungsinformation 7, die ausdrückt in welche Richtung ein Energieverbrauch der Teilnehmer 3 gesteuert werden soll.

Die ermittelte Kenngröße 6 und/oder die Steuerungsinformation 7 wird von der Kommunikationseinrichtung 5 an die Teilnehmer 3 übermittelt. Dabei kann die Kommunikationseinrichtung 5 diese beispielsweise über ein Kommunikationsnetzwerk, das beispielsweise auch drahtlos ausgebildet sein kann, versenden. Im einfachsten Fall können beispielsweise auch einzelne binäre Übertragungssignale übermittelt werden. Eine Kommunikation der Teilnehmer 3 zurück in Richtung der Energiemanagementeinrichtung 2 findet vorteilhafter Weise nicht statt. Durch die empfangene Kenngröße 6 sind die Teilnehmer über den energetischen Gesamtzustand des Energienetzwerks 1 informiert. Die Kenngröße 6 und/oder die Steuerungsinformation 7 wird von der Energiemanagementeinrichtung 2 periodisch alle fünf Sekunden ermittelt und an die Teilnehmer 3 geschickt.

Bei dem erfindungsgemäßen Energienetzwerk 1 in der in Figur beispielhaft dargestellten Ausführungsform sind fünf verschiedenen Steuerungsinformationen 7 vorgesehen. Diese sind Mehrverbrauch gewünscht, freier Betrieb, Einfrieren, limitierter Betrieb und stark limitierter Betrieb. Mehrverbrauch gewünscht bedeutet, dass der Energieverbrauch der Teilnehmer möglichst erhöht wird. Freier Betrieb bedeutet, dass die aktuelle Auslastung des Energienetzwerks keinen Bedarf zur Energieverbrauchsreduktion nötig macht und dass sogar eine Erhöhung des Energiekonsums bei den Teilnehmern 3 erlaubt ist. Die Steuerungsinformation Einfrieren bedeutet, dass zwar kein Bedarf zur Energieverbrauchsreduktion besteht, aber eine Erhöhung des Energiekonsums auf Seiten der Teilnehmer nicht erlaubt ist. Limitierter Betrieb bedeutet, dass ein Bedarf zur Energieverbrauchsreduktion besteht, obwohl der Gesamtsystemzustand noch unkritisch ist. Schließlich bedeutet die Steuerungsinformation stark limitierter Bedarf, dass der Bedarf zur Energieverbrauchsreduktion sehr groß ist und der Gesamtsystemzustand kritisch ist.

Die Teilnehmer 3 steuern ihren Energieverbrauch anhand der empfangenen Kenngröße 6 und der Steuerungsinformation 7 basierend auf ihrem aktuellen Zustand und ihren Möglichkeiten. Durch das erfindungsgemäße Verfahren, das zunächst die Systemauslastung des Energienetzwerks 1 zentral durch die Energiemanagementeinrichtung 2 ermittelt und anschließend die Kenngröße 6 und die Steuerungsinformation 7 an die Teilnehmer periodisch übermittelt, die entsprechend ihren Energieverbrauch steuern, ergibt sich ein iteratives Verfahren. Bei ersten Anzeigen einer möglichen Überlastung im Energienetzwerk 1 wird von der Energiemanagementeinrichtung 2 die Steuerungsinformation 7 "Einfrieren" ermittelt und an die Teilnehmer 3 kommuniziert. Steigt der Energieverbrauch trotzdem weiter an, wird die Steuerungsinformation 7 "limitierter Betrieb" versendet. Wenn dies immer noch nicht ausreichend ist wird im nächsten Schritt die Steuerungsinformation 7 "stark limitierter Betrieb" abgesetzt. Die Teilnehmer reagieren anschließend entsprechend. So wird der Energieverbrauch des Energienetzwerks 1 auf vorteilhafte Weise geregelt. Um bestimmte Teilnehmer 3 zu priorisieren, können unterschiedliche Gruppen von Teilnehmer 3 gebildet werden. In einer ersten Gruppe von Teilnehmern 3 können beispielsweise sehr große Verbraucher des Energienetzwerks 1 zusammengefasst werden. Diese können priorisiert mit bestimmten Steuerungsinformationen 7 angesprochen werden.

Das erfindungsgemäße Verfahren bietet einige Vorteile. Beispielsweise ist es nicht nötig, dass Kenntnisse über die Teilnehmer 3 in der Energiemanagementeinrichtung 2 vorhanden sind und verwaltet werden müssen. Dadurch lassen sich die Teilnehmer 3 leicht integrieren. Die Energiemanagementeinrichtung 2 ist konstruktiv einfach und kann effektiver arbeiten. Da bei dem erfindungsgemäßen Verfahren die Aufgaben zwischen Energiemanagementeinrichtung 2 und Teilnehmern 3 verteilt werden, wird eine hohe Reaktionsgeschwindigkeit erreicht. Jeder Teilnehmer 3 entscheidet anhand seines Zustandes selbst. Ein verspäteter Zug kann beispielsweise trotz gleicher Lastsituation anders als ein unpünktlicher Zug reagieren. Das Verfahren zeichnet sich durch einen geringen Kommunikationsbedarf aus, was die Geschwindigkeit erhöht und die Kommunikationseinrichtung 5 vereinfacht.

## Patentansprüche

1. Verfahren zur Steuerung des Energieflusses in einem, mehrere Teilnehmer (3) aufweisenden Energienetzwerk (1) einer verkehrstechnischen Anlage,
bei dem wenigstens eine für eine Auslastung des Energienetzwerks (1) repräsentative Kenngröße (6) und wenigstens eine Steuerungsinformation (7) ermittelt wird,
bei dem die wenigstens eine Kenngröße (6) und die wenigstens eine Steuerungsinformation (7) an zumindest einige der Teilnehmer (3) übermittelt wird,
bei dem zumindest von einigen der Teilnehmer (3) jeweils in Abhängigkeit von der wenigstens einen Kenngröße (6) und der wenigstens einen Steuerungsinformation (7) ein Energieverbrauch des Teilnehmers (3) selbstständig gesteuert wird, wobei die Steuerungsinformation (7) angibt, in welche Richtung oder auf welche Art der Teilnehmer (3) seinen Energieverbrauch steuern soll,
bei dem zur Priorisierung zumindest von einigen der Teilnehmer (3) wenigstens zwei unterschiedliche Gruppen von Teilnehmern (3) gebildet werden, wobei in einer ersten Gruppe von Teilnehmern (3) große Verbraucher und in einer zweiten Gruppe von Teilnehmern (3) kleinere Verbraucher des Energienetzwerks (1) zusammengefasst werden, und
bei dem die wenigstens eine Steuerungsinformation (7) priorisiert an die Teilnehmer (3) der ersten Gruppe von Teilnehmern (3) übermittelt wird.

2. Verfahren nach Anspruch 1,
**dadurch gekennzeichnet, dass**
wenigstens ein Grenzwert für die Auslastung des Energienetzwerks (1) an zumindest einige der Teilnehmer (3) übermittelt wird.

3. Verfahren nach Anspruch 1 oder 2,
**dadurch gekennzeichnet, dass**
die Kenngröße und/oder die Steuerungsinformation (7) an alle Teilnehmer (3) übermittelt wird.

4. Verfahren nach Anspruch 2,
**dadurch gekennzeichnet, dass**
wenigstens eine erste Steuerungsinformation (7) an die erste Gruppe von Teilnehmern (3) und wenigstens eine zweite Steuerungsinformation (7) an die zweite Gruppe von Teilnehmern (3) übermittelt werden.

5. Verfahren nach einem der oben genannten Ansprüche,
**dadurch gekennzeichnet, dass**
die wenigstens eine Kenngröße (6) zentral und ohne Kommunikation mit den Teilnehmern (3) ermittelt wird.

6. Verfahren nach einem der oben genannten Ansprüche,
**dadurch gekennzeichnet, dass**
die wenigstens eine Kenngröße (6) periodisch ermittelt und übermittelt wird.

7. Verfahren nach einem der oben genannten Ansprüche,
**dadurch gekennzeichnet, dass**
der Energieverbrauch des Teilnehmers (3) in Abhängigkeit vom Zustand des Teilnehmers (3) gesteuert wird.

8. Energiemanagementeinrichtung (2), wobei die Energiemanagementeinrichtung (2) ausgebildet ist, den Energiefluss in einem, mehrere Teilnehmer (3) aufweisenden Energienetzwerk (1) einer verkehrstechnischen Anlage zu steuern,
mit wenigstens einer Verarbeitungseinrichtung (4), die zur Ermittlung wenigstens einer für eine Auslastung des Energienetzwerks (1) repräsentativen Kenngröße (6) und wenigstens einer Steuerungsinformation (7) ausgebildet ist, und
mit wenigstens einer Kommunikationseinrichtung (5), die zur Übermittlung der wenigstens einen Kenngröße (6) und der wenigstens einen Steuerungsinformation (7) an zumindest einige der Teilnehmer (3) ausgebildet ist, wobei die Steuerungsinformation (7) angibt, in welche Richtung oder auf welche Art die Teilnehmer (3) ihren Energieverbrauch steuern sollen,
mit einer Einrichtung, die ausgebildet ist, zur Priorisierung zumindest von einigen der Teilnehmer (3) wenigstens zwei unterschiedliche Gruppen von Teilnehmern (3) zu bilden, wobei in einer ersten Gruppe von Teilnehmern (3) große Verbraucher und in einer zweiten Gruppe von Teilnehmern (3) kleinere Verbraucher des Energienetzwerks (1) zusammengefasst werden, und die wenigstens eine Kommunikationseinrichtung (5) ausgebildet ist, die wenigstens eine Steuerungsinformation (7) priorisiert an die Teilnehmer (3) der ersten Gruppe von Teilnehmern (3) zu übermitteln.

9. Teilnehmer (3) zum Einsatz in einem Energienetzwerk (1) einer verkehrstechnischen Anlage, mit einer Steuerungseinrichtung (8), die zum selbständigen Steuern eines Energieverbrauchs des Teilnehmers (3) in Abhängigkeit von wenigstens einer für eine Auslastung des Energienetzwerks (1) repräsentativen Kenngröße (6) und
wenigstens einer, von einer Energiemanagementeinrichtung nach Anspruch 8 empfangenen, Steuerungsinformation (7) ausgebildet ist, wobei die Steuerungsinformation (7) angibt, in welche Richtung oder auf welche Art der Teilnehmer (3) seinen Energieverbrauch steuern soll.

10. Energienetzwerk (1) einer verkehrstechnischen Anlage,
mit mehreren Teilnehmern (3) gemäß Anspruch 9 und mit wenigstens einer Energiemanagementeinrichtung (2) nach Anspruch 8.

## Claims

1. Method for controlling the energy flow in an energy network (1), of a traffic system, having a number of users (3),
in which at least one parameter (6) characteristic of a working load of the energy network (1) and at least one item of control information (7) is determined,
in which the at least one parameter (6) and the at least one item of control information (7) is transferred to at least a few of the users (3),
in which an energy consumption of the user (3) is independently controlled at least by a few of the users (3) in each case as a function of the at least one parameter (6) and the at least one item of control information (7), wherein the item of control information (7) specifies the direction or the manner in which the user is to control its energy consumption, in which at least two different groups of users (3) are formed in order to prioritise at least a few of the users (3), wherein in a first group of users (3) large consumers and in a second group of users (3) smaller consumers of the energy network (1) are combined, and
in which the at least one item of control information (7) is transferred with higher priority to the user (3) of the first group of users (3).

2. Method according to claim 1,
**characterised in that**
at least one limit value for the working load of the energy network (1) is transferred to at least a few of the users (3).

3. Method according to claim 1 or 2,
**characterised in that**
the parameter and/or the item of control information (7) is transferred to all users (3).

4. Method according to claim 2,
**characterised in that**
at least one first item of control information (7) and at least one second item of control information (7) are transferred to the first group of users (3) and to the second group of users (3) in each instance.

5. Method according to one of the afore-cited claims,
**characterised in that**
the at least one parameter (6) is determined centrally and without communication with the users (3).

6. Method according to one of the afore-cited claims, **characterised in that**
the at least one parameter (6) is determined and transferred periodically.

7. Method according to one of the afore-cited claims, **characterised in that**
the energy consumption of the user (3) is controlled as a function of the state of the user (3).

8. Energy management device (2), wherein the energy management device (2) is embodied to control the energy flow in an energy network (1), of a traffic system, having a number of users (3),
with at least one processing device (4), which is embodied to determine at least one parameter (6) which is representative of a working load of the energy network (1) and at least one item of control information (7), and
with at least one communication device (5), which is embodied to transfer the at least one parameter (6) and the at least one item of control information (7) to at least a few of the users, wherein the item of control information (7) specifies the direction or manner in which the users (3) are to control their energy consumption
with a device which is embodied to form at least two different groups of subscribers (3) in order to prioritise at least a few of the users (3), wherein in a first group of users (3), large consumers and in a second group of users (3) smaller consumers of the energy network (1) are combined, and the at least one communication device (5) is embodied to transfer the at least one item of control information (7) with higher priority to the users (3) of the first group of users (3).

9. User (3) for use in an energy network (1) of a traffic system, having a control device (8) which is embodied to independently control an energy consumption of the user (3) as a function of at least one parameter (6) which is representative of a working load of the energy network (1) and at least one item of control information (7) received by an energy management device according to claim 8, wherein the item of control information (7) specifies the direction and manner in which the user (3) is to control its energy consumption.

10. Energy network (1) of a traffic system, having a number of users (3) according to claim 9 and having at least one energy management device (2) according to claim 8.

## Revendications

1. Procédé de commande du flux d'énergie dans un réseau (1) d'énergie, ayant plusieurs consommateurs (3), d'une installation de la technique des transports,
dans lequel on détermine au moins une grandeur (6) caractéristique représentative d'une utilisation du réseau (1) d'énergie et au moins une information (7) de commande,
dans lequel on transmet la au moins une grandeur (6) caractéristique et la au moins une information (7) de commande a au moins certains des consommateurs (3),
dans lequel on commande indépendamment une consommation d'énergie du consommateur (3) au moins de certains des consommateurs (3) respectivement en fonction de la au moins une grandeur (6) caractéristique et de la au moins une information (7) de commande, l'information (7) de commande indiquant dans quelle direction ou de quelle façon le consommateur (3) doit commander sa consommation d'énergie,
dans lequel, pour donner la priorité au moins à certains des consommateurs (3), on forme au moins deux groupes différents de consommateurs (3), dans lequel on rassemble dans un premier groupe de consommateurs (3) des grands consommateurs, et dans un deuxième groupe de consommateurs (3), des consommateurs plus petits du réseau (1) d'énergie, et
dans lequel on transmet la au moins une information (7) de commande en priorité aux consommateurs (3) du premier groupe de consommateurs (3).

2. Procédé suivant la revendication 1,
**caractérisé en ce que**
l'on transmet au moins une valeur limite de l'utilisation du réseau (1) d'énergie à au moins certains des consommateurs (3).

3. Procédé suivant la revendication 1 ou 2,
**caractérisé en ce que** l'on transmet la grandeur caractéristique et/ou l'information (7) de commande à tous les consommateurs (3).

4. Procédé suivant la revendication 2,
**caractérisé en ce que** l'on transmet au moins une première information (7) de commande au premier groupe de consommateurs (3) et au moins une deuxième information (7) de commande au deuxième groupe de consommateurs (3).

5. Procédé suivant l'une des revendications précédentes, **caractérisé en ce que**
l'on détermine la au moins une grandeur (6) caractéristique de manière centrale et sans communication avec les consommateurs (3).

6. Procédé suivant l'une des revendications précédentes, **caractérisé en ce que**
l'on détermine et transmet périodiquement la au moins une grandeur (6) caractéristique.

7. Procédé suivant l'une des revendications précédentes, **caractérisé en ce que**
l'on commande la consommation d'énergie du consommateur (3) en fonction de l'état du consommateur (3).

8. Dispositif (2) de gestion d'énergie, dans lequel le dispositif (2) de gestion d'énergie est constitué pour commander le flux d'énergie dans un réseau (1) d'énergie, ayant plusieurs consommateurs (3) d'une installation de la technique des transports
comportant au moins un dispositif (4) de traitement, qui est constitué pour la détermination d'au moins une grandeur (6) caractéristique représentative d'une utilisation du réseau (1) d'énergie et au moins d'une information (7) de commande, et comprenant au moins un dispositif (5) de communication, qui est constitué pour la transmission de la au moins une grandeur (6) caractéristique et de la au moins une information (7) de commande à au moins certains des consommateurs (3), l'information (7) de commande indiquant dans quelle direction ou de quelle façon les consommateurs (3) doivent commander leur consommation d'énergie, comprenant un dispositif, qui est constitué pour former, pour donner la priorité à au moins certains des consommateurs (3), au moins deux groupes différents de consommateurs (3), dans lequel il est rassemblé, dans un premier groupe de consommateurs (3), des grands consommateurs, et, dans un deuxième groupe de consommateurs (3), des consommateurs plus petits du réseau (1) d'énergie et le au moins un dispositif (5) de communication est constitué pour transmettre la au moins une information (7) de commande en priorité aux consommateurs (3) du premier groupe de consommateurs (3).

9. Consommateur (3) à utiliser dans un réseau (1) d'énergie d'une installation de la technique des transports, comprenant un dispositif (8) de commande, qui est constitué pour la commande indépendante d'une consommation d'énergie du consommateur (3), en fonction d'au moins une grandeur (6) caractéristique représentative d'une utilisation du réseau (1) d'énergie et d'au moins une information (7) de commande reçue d'un dispositif de gestion d'énergie suivant la revendication 8, l'information (7) de commande indiquant dans quelle direction et de quelle façon le consommateur (3) doit commander sa consommation d'énergie.

10. Réseau (1) d'énergie d'une installation de la technique des transports, comprenant plusieurs consommateurs (3) suivant la revendication 9 et comprenant au moins un dispositif (2) de gestion d'énergie suivant la revendication 8.
